# EUROPEAN PATENT APPLICATION

(11) **EP 4 000 855 A1**
(43) Date of publication of application: **25.05.2022**
(21) Application number: 21206488.5
(22) Date of filing: 04.11.2021
(51) Int. Cl.: B29C 44/12, B29C 33/34, B29C 44/42, B29C 44/58, B29C 31/00, B29L 31/00

(54) **FOAMING APPARATUS FOR PANELS**

(30) Priority: 19.11.2020 IT 202000027717
(71) Applicant: Cosma S.r.l., 20136 Milano (IT)
(72) Inventor: MORETTI, Bruno, 20136 MILANO (IT)
(74) Representative: Faggioni, Carlo Maria

(57) **Abstract**

A foaming apparatus (S) is described for products having sandwiched components with expandable insulating material interposed, such as refrigerator panels, comprising
a fixed frame (F) whereon a drum structure (1) is rotatingly supported, provided with a plurality of containment jigs (2),
at least a foaming unit, and
a conveyor line (L) arranged according to a loading direction, wherein
said containment jigs (2) comprise a pair of opposite frames (21, 22) which are mutually approachable, whereon two arrays of cylinders (21a, 22a) are mounted, with parallel rotation axes crosswise to said loading direction, so as to define opposite sliding planes.

## Description

### FIELD OF THE INVENTION

The present invention relates to a foaming apparatus for products having paired components, such as panels of household appliances.

### TECHNICAL BACKGROUND

As is well known, some types of household appliances require the provision of sandwiching insulating layers between two outer shells, possibly of different materials, making up a composite product.

In refrigeration cabinets, for example, the insulating layer is an important component for preventing a thermal dispersion between the inside and the outside of the refrigerator. The consolidated construction method for manufacturing insulating components - generically panels with various functions - involves coupling two opposite external plates or shells, defining an internal compartment or cavity which is then filled with an insulating material.

The insulating material, typically an expandable polyurethane or other expandable insulating material, is injected in a fluid state and made to expand and subsequently crosslink.

Since the internal compartment of the panel has a significant volume, significant expansion pressures develop during the expanding process of the injected material. To prevent the external shells of the panel from buckling and deforming under the internal pressure during the expansion step of the expandable material, they are provisionally engaged in a rigid containment structure, i.e., a kind of mould. In fact, it is important that the external shells are kept mutually coupled and that the respective surfaces are resting against rigid abutment structures, so as not to collapse under pressure. Once the crosslinking of the expandable material is finished, the latter acquires a dimensional stability and no longer exerts any pressure, whereby the composite product can be extracted from the abutment structure.

Therefore, in the foaming apparatuses of the insulated panels of household appliances, the external shells of the panels are coupled and then constrained in an abutment mould, before performing the actual foaming.

As is known, once the injection of the expanded polyurethane (or other equivalent insulating material) is completed, it is necessary to wait for the expansion and crosslinking times of the expandable material, before being able to reopen and free the mould from the completed product.

The foaming apparatus therefore remains engaged for a long time, until the expansion of the insulating material is completed, without being able to perform other functions. Obviously, this implies problems with the use of space.

To partially remedy this condition, rotating apparatuses have been proposed in which, on the same support frame, a rotating equipment is mounted which accommodates a plurality of foaming moulds. In particular, a rotatable drum is provided on the apparatuses whereon a plurality of foaming jigs is mounted, which can be engaged in turn with the respective housing moulds of the panels during processing.

Thereby, against a use on the ground, which is slightly larger than a single foaming apparatus, it is possible to accommodate a plurality of jigs which are engaged by the foaming moulds as the crosslinking process is completed in the others.

This type of apparatus has been conceptually known since the 1950s, for example by IT1203353, but also, more recently, for example by IT102001900937806 and IT102011901985663.

These rotating-drum apparatuses have a more efficient use of space, but still have significant structural complexities.

In particular, the loading of the panel moulds on the jigs installed on the drum can occur in the longitudinal direction (with respect to the rotation axis) or in the transverse direction, but still requires a complex opening of the jig in order to introduce the mould with the panels. This complication in opening not only leads to a slowdown in operating times, but also requires a number of control members which results in a maintenance and replacement burden.

The Applicant has therefore identified room for further improvement of the existing drum apparatuses.

### SUMMARY OF THE INVENTION

Therefore, the object of the present invention is to provide a foaming apparatus for insulating panels which solves the above-mentioned problems. In particular, it is desired to provide a drum apparatus with simplified foaming jigs, adapted to accommodate the foaming moulds in a simple and quick manner without having to carry out complex opening movements.

Such an object is achieved according to the invention by an apparatus having the features defined in essential terms in the main claim attached hereto.

Other preferred features of the invention are defined in the dependent claims.

### BRIEF DESCRIPTION OF THE DRAWINGS

Further features and advantages of the invention will anyhow be more evident from the following detailed description of a preferred embodiment thereof, provided merely by way of non-limiting example and illustrated in the accompanying drawings, in which:

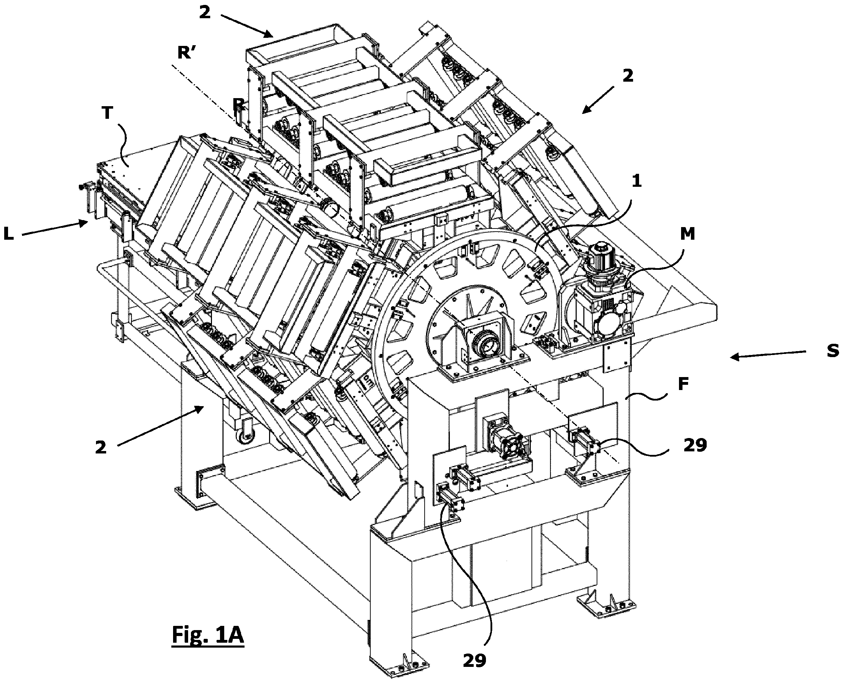

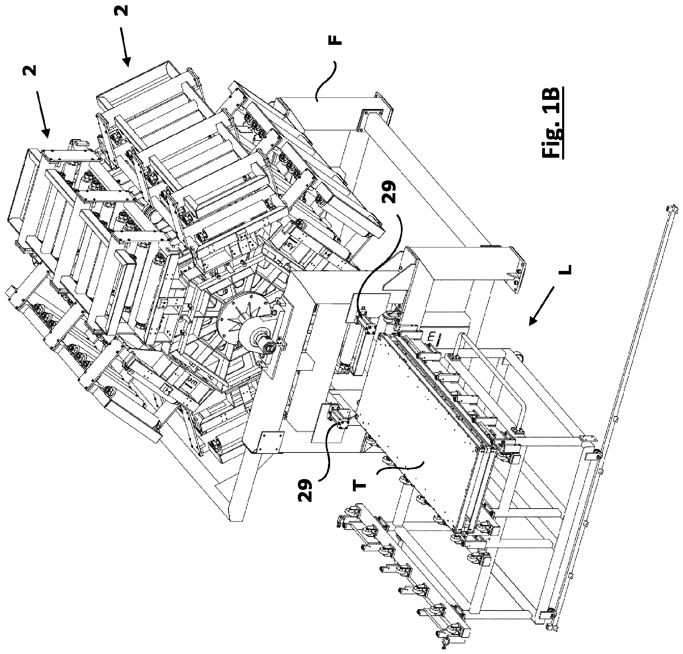

figs. 1A and 1B are views according to two opposite perspectives of an apparatus according to the invention;
figs. 2A and 2B are views according to two different perspectives of a single jig mounted on the apparatus of fig. 1; and
fig. 2C is a side elevation view of the jig shown in fig. 2A.

### DETAILED DESCRIPTION OF THE PREFERRED EMBODIMENT

A foaming system is designed for injecting an expandable insulating foam, for example expandable polyurethane, into a compartment or cavity of a product, for example a panel, obtained by coupling two external components, such as shells of thin material (metal sheets, plastic shells, ...).

In the following, reference will be made to a refrigerator panel, typically a refrigerator door, where the apparatus of the invention finds a particularly advantageous use.

In general, the foaming process involves a pair of components - for example an external sheet on one side and a plastic shell on the other - to be assembled together, leaving a compartment to be filled with the expandable foam.

In a foaming station, a pre-assembled panel reaches a foaming apparatus S along a conveyor line L - along which a plurality of coupled components is conveyed in sequence. The panels on which the foaming of insulating material has been completed can then continue towards other processes along the same line L or along a different output line (not shown) arranged, for example, on the opposite side of the apparatus S with respect to the line L.

The coupled components, between which expandable material, such as foamable polyurethane, is to be injected, are preferably properly maintained coupled by a containment frame or pallet T, inside which the components are housed in a mould.

The foaming apparatus S consists, in a manner known per se, of a frame F fixed to the ground, on which a rotatable drum structure 1 equipped with a plurality of containment jigs 2 is mounted.

The containment jigs 2 are equally angularly spaced on the periphery of the drum 1 (six of them are shown in the figures, but they could also be more or less depending on their respective dimensions) and are generally rectangular in shape, with the longer side aligned with a horizontal rotation axis R-R' of the drum 1.

Each containment jig 2 is arranged to accommodate a pallet T. The expandable material is injected with special mixing and injection heads (not shown in the drawings) immediately before or immediately after the pallet T has been loaded onto the relative containment jig 2. Once the pallet T is locked in a respective containment jig 2, for example the first one in the lower position, the drum 1 is rotated to bring the last containment jig 2 to replace the first one. The last containment jig 2 is the one which houses the pallet T which has spent the most time on board the drum 1 and therefore has completed the crosslinking time of the expandable foam. The last containment jig 2 is then unloaded from the pallet T and it is ready to become the first one of the subsequent cycles for loading with a new pallet T.

The rotation of the drum 1 is indexed, with a pitch equivalent to the angular distance between the jigs 2 and is controlled by an electric motor M suitably controlled by a logic which takes into account the arrival cycle of the panels on the line L, the injection times and the crosslinking times of the expandable material. In fact, a complete rotation of the drum 1 occurs with a time compatible with the complete crosslinking of the expandable material used.

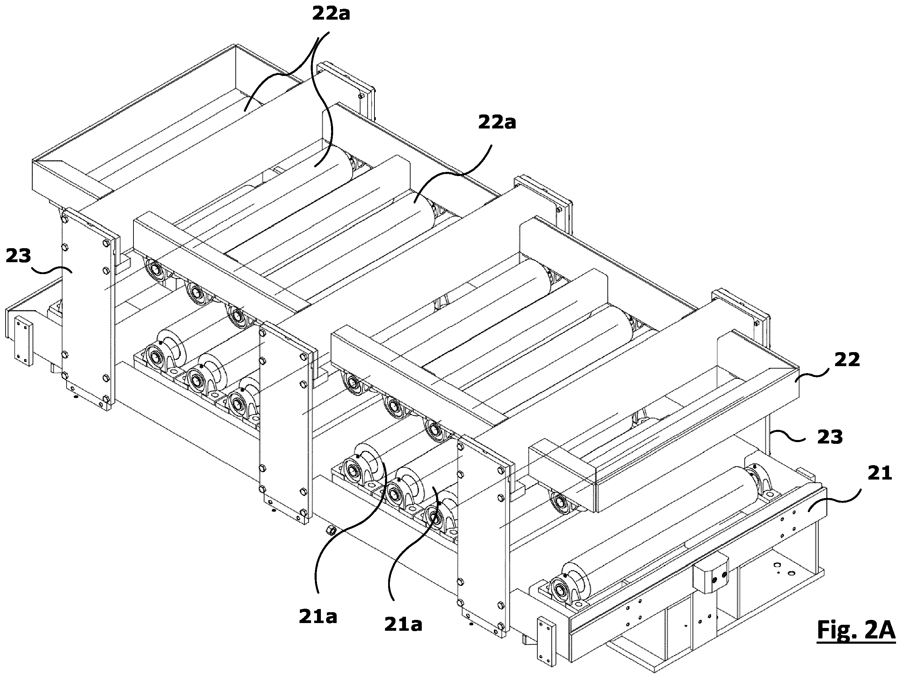

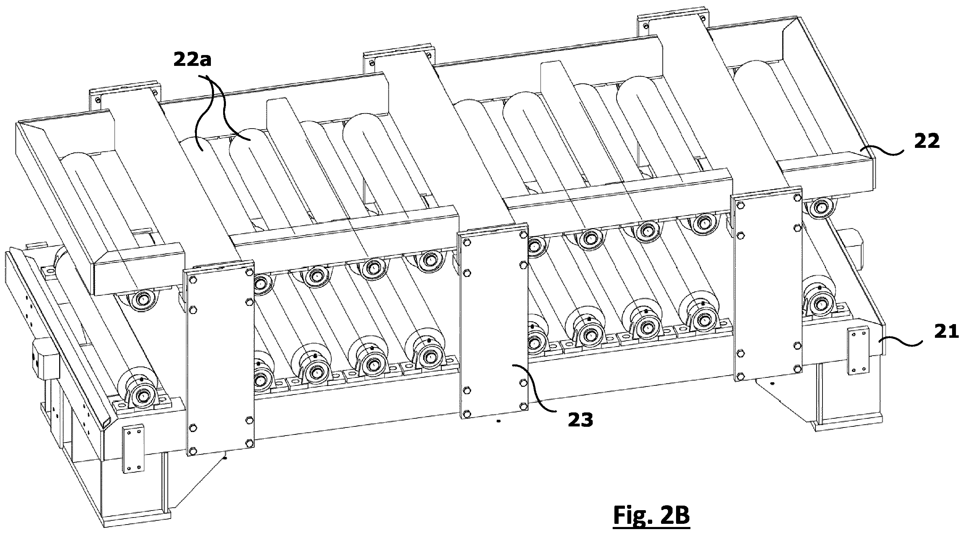

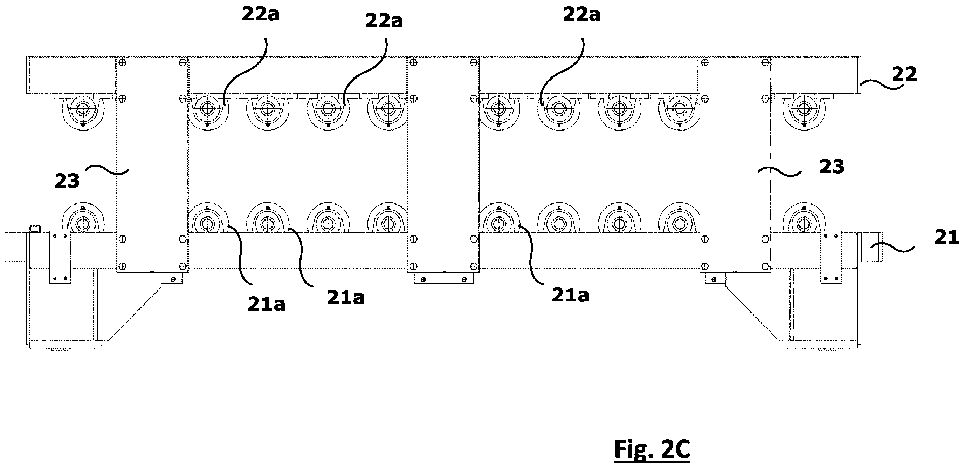

According to the invention, each jig 2 consists of - as clearly depicted in figs. 2A, 2B and 3 - a pair of opposite frames 21 and 22 on which respective arrays of rotating cylinders 21a and 22a are mounted, arranged with parallel rotation axes and on two parallel planes. The rotation axes of the cylinders 21a and 22a are orthogonal to a longitudinal axis of the jig 2. In particular, the cylinders 21a and 22a define two parallel sliding planes, between which a pallet T or directly a panel is adapted to slide longitudinally with precision.

The two opposite frames 21 and 22 are kept spaced apart by suitable spacing means 23 arranged along the two greater sides of the jigs. The spacing means are fixed at least during processing of a panel but can be at least adjustable to be able to adapt to the different thicknesses of pallets T to be housed in the jig 2.

For the introduction and extraction of the pallets T in the jigs 2, roller sliding planes are used, which are arranged at the same distance between the external surfaces of the pallet T in the direction of the thickness thereof. The cylinders 21a and 22a can preferably include an external coating layer of elastic or soft material, for example an elastomeric material, which suitably sized allows to partly accommodate the dimensional variations of the pallets T due to manufacturing tolerances.

The pallet T can be introduced and extracted from the same side, or it can be introduced from one end of the jig 2 and extracted from the opposite end. To this purpose, jig 2 is provided either with an inlet end aperture only or with an inlet and outlet end apertures

Once the pallet T is housed between the two arrays of cylinders, the expansion stress due to the pressure of the expandable foam is discharged onto the frames 21 and 22 through the spacing means 23.

Advantageously, the two arrays of cylinders 21a and 22a are at least partly motorised, so as to be able to push the pallet T in and out of the jig 2 in an assisted manner, without the need to include an opening/closing of the jig 2.

If necessary, a heating device can be included, for example integral with the fixed frame F, to help accelerate the crosslinking process.

As can be understood from the above description, the solution provided herein allows to fully achieve the objects stated in the introduction.

In fact, thanks to the presence of suitably spaced rolling cylinders, it is possible to introduce and extract the pallets T with the components intended for the foaming process very easily, ensuring an excellent retention of the forces in the expansion step but a reduction of the maintenance burden. The loading/extraction times can be reduced, as well as the handling efforts of the pallets T, which can be simply moved on the sliding planes.

This construction is simple and robust and does not require special maintenance.

It is understood, however, that the invention is not to be considered as limited by the particular arrangement illustrated above, which represents only an exemplary implementation of the same, but different variants are possible, all within the reach of a person skilled in the art, without departing from the scope of the invention itself, which is exclusively defined by the following claims.

The illustrated preferred embodiment provides that the spacing means are distributed along the longitudinal axis of the apparatus. It is not excluded, however, that the jigs can be arranged for a loading direction of the pallets which is transverse to the rotation axis of the drum: in this case, the rotation axes of the cylinders would be parallel to the rotation axis R-R' of the drum and the adjustable spacing means would be distributed along a direction orthogonal to the drum, i.e. on the shorter side of the jig.

## Claims

1. A foaming apparatus (S) for products having sandwiched components with expandable insulating material in between, such as refrigerator panels, comprising
a fixed frame (F) whereon a drum structure (1) is rotatingly supported, provided with a plurality of containment jigs (2), at least a foaming unit, and
a conveyor line (L) arranged according to a loading direction, **characterised in that**
said containment jigs (2) comprise a pair of opposite frames (21, 22), whereon two opposite arrays of cylinders (21a, 22a) are mounted, with parallel rotation axes crosswise to said loading direction, so as to define opposite sliding planes.

2. The foaming apparatus (S) as in 1, wherein the rotation axes of said cylinders (21a, 22a) are crosswise to a rotation axis (R-R') of said drum structure (1).

3. The foaming apparatus (S) as in 2, wherein said loading direction is parallel to said rotation axis (R-R').

4. The foaming apparatus (S) as in any one of the preceding claims, wherein said opposite frames (21, 22) of the containment jigs (2) are maintained spaced apart by a plurality of spacing means (23).

5. The foaming apparatus (S) as in any one of the preceding claims, wherein said arrays of cylinders (21a, 22a) are at least in part motorised.
